# EUROPÄISCHE PATENTSCHRIFT

(11) **EP 3 208 020 B1**
(45) Veröffentlichungstag und Bekanntmachung des Hinweises auf die Patenterteilung: **10.07.2024**
(21) Anmeldenummer: 17152273.3
(22) Anmeldetag: 19.01.2017
(51) Int. Cl.: B23D 36/00, B23D 59/00, B23D 45/20

(54) **VORRICHTUNG UND VERFAHREN ZUM BESCHNEIDEN UND VERMESSEN EINER PLATTE**
METHOD AND DEVICE FOR CUTTING AND MEASURING A PLATE
DISPOSITIF ET PROCÉDÉ DE TAILLE ET DE MESURE D'UNE PLAQUE

(30) Priorität: 19.02.2016 DE 102016001995
(43) Veröffentlichungstag der Anmeldung: 23.08.2017
(73) Patentinhaber: Siempelkamp Logistics & Service GmbH, 55543 Bad Kreuznach (DE)
(72) Erfinder: Hildebrandt, Mario, 82515 Wolfratshausen (DE); Huber, Wolfgang, 82398 Polling (DE); Otto, Frank Dr., 82538 Geretsried (DE); Weitl, Albert, 83673 Bichl (DE)
(74) Vertreter: von dem Borne, Andreas

(56) Entgegenhaltungen:
- EP-A1- 2 030 746
- WO-A1-2010/095551
- WO-A1-99/61212
- DE-A1- 102007 018 416
- DE-A1- 102008 032 160
- DE-A1- 102009 012 543
- DE-A1- 19 838 964
- DE-B4- 102008 024 806
- DE-C1- 10 019 054
- JP-A- 2003 200 384
- JP-A- 2010 110 789
- JP-A- 2011 038 909
- JP-A- 2013 163 626
- JP-A- H0 552 526
- JP-A- H06 147 836
- US-A1- 2007 209 736

## Beschreibung

Die Erfindung betrifft ein Verfahren zum Beschneiden und Vermessen einer Holzwerkstoffplatte nach Anspruch 1.

Die Erfindung betrifft ferner eine Vorrichtung zum Beschneiden und Vermessen einer Holzwerkstoffplatte nach Anspruch 5.

In der Regel werden beleimte Späne in diskontinuierlichen oder kontinuierlichen Pressen zu einem flachen Holzwerkstoff gepresst. Dieser muss auf bestimmte Größen zurechtgeschnitten werden. Dabei werden als Schneideinrichtungen in erster Linie Kreissägen eingesetzt. Wenn der Schnitt beim Transport des Holzwerkstoffs erfolgt, läuft die Säge diagonal über den Werkstoff, um letztendlich Platten mit geraden Vorder- und Hinterkanten zu erhalten, betrachtet also rechtwinklig zur Transportrichtung.

In Hochleistungsanlagen schneiden Diagonalsägen immer häufiger im Tandem-, Triple- oder Quattro- Modus (2-, 3- oder 4-Sägenaggregate sind gleichzeitig aktiv). Der Prozess der manuellen Plattenvermessung in Verbindung mit der manuellen Korrektur der Schneidelemente-Einstellungen bei Maßabweichungen gestaltet sich für den Hersteller als zu komplex und langwierig.

Dabei werden Platten bereits in einer Vermessungsstation optisch mittels Kameras vermessen, die ihre Messdaten an eine Auswerteeinheit weitergeben. Im älteren Stand der Technik findet man beispielsweise die DE 1 806 873 A. Das darin beschriebene Verfahren ist allerdings sehr ungenau. Es wird lediglich ein Längensignal ermittelt und angezeigt, das aber schwerwiegende Störgrößen wie beispielsweise eine schwankende Transportgeschwindigkeit oder temperaturbedingte Ausdehnungsschwankungen unberücksichtigt lässt. Die Messgenauigkeit moderner Messkameras, wie sie beispielsweise die Firma Sick AG in 79183 Waldkirch vertreibt, hat im Übrigen deutlich zugenommen.

Dennoch sind die Ergebnisse beim Beschnitt von Holzwerkstoffplatten noch nicht zufriedenstellend und häufig müssen die Platten manuell vermessen werden, entweder durch Ausschleusen von Gutplatten aus der Produktion oder durch Ausmessen später im Kühlsternwender. Hier will die Erfindung Abhilfe schaffen.

Im Übrigen kennt man aus der WO 99/61212 A1 ein Verfahren zum Aufteilen plattenförmiger Objekte, wobei ein Kamerasystem ein charakteristisches Oberflächenmuster erfasst und entsprechend die Objekte in einer Schneidevorrichtung positioniert.

Die DE 100 19 054 C1 beschreibt ein Verfahren zum Beschneiden von Paneelen oder dergleichen, bei dem ein Kamerasystem auf eine Dekorschicht aufgebrachte Markierungen detektiert und auf dieser Basis eine oder mehrere Sägen ausrichtet.

In der DE 198 38 964 A1 wird eine Diagonalsäge zur Aufteilung von auf einem Sägetisch durchlaufendem plattenförmigen Sägegut beschrieben, wobei die Säge bei gleichzeitigem Vorschub der Platte quer zu deren Vorschubrichtung sägt und hierfür einen den Sägebereich unter einem spitzen Aufstellwinkel zur Plattenvorschubrichtung übergreifenden Sägebalken aufweist, an dem ein motorisch verfahrbarer Sägewagen geführt ist.

Ferner offenbart die JP 2013-163626 A eine Anlage zum Schneiden von Platten, z. B. Glasplatten, wobei die Platten mit einem Kamerasystem mit Kameras vermessen werden.

Die Vermessung von Platten im Zuge der Zuschneidung wird insbesondere im Zusammenhang mit Glasplatten außerdem in der WO 2010/095551 A1 behandelt.

Ausgehend von der eingangs erläuterten Problematik ist es die Aufgabe der Erfindung, die Genauigkeit des Zuschnitts und der Vermessung bei Platten zu verbessern.

Hinsichtlich des Verfahrens zum Beschneiden und Vermessen einer Platte wird die Aufgabe gelöst durch die Merkmale des Anspruchs 1.

Hinsichtlich der Vorrichtung wird die Aufgabe mit den Merkmalen des Anspruchs 5 gelöst. Es ist vorgesehen, dass aufgrund der durch die Messkameras gewonnenen und an die Auswerte- und Steuerungseinheit weitergeleiteten Messergebnisse durch diese eine Stelleinrichtung zur Ausrichtung der Schneideinrichtung ansteuerbar ist.

Die gemessenen Daten für die Abmessungen der letzten Platte werden also genutzt, um für eine der folgenden Platten die Ausrichtung der Säge so einzustellen, dass sich das Ergebnis hinsichtlich beispielsweise der Eckwinkel, der gleichen Diagonalen- oder Kantenlängen verbessert. Die Messkameras sind hierzu in Plattenlaufrichtung hinter der Schneideeinrichtung angeordnet. Die Stelleinrichtungen können beispielsweise durch Stellmotoren jeder Art, also auch durch hydraulische oder elektrische Antriebe gebildet sein. Sie haben dann in der Regel die Aufgabe, die Führung einer Kreissäge so einzustellen, dass der Schnitt ein exakt vorgegebenes Plattenmaß erzeugt.

Es ist vorgesehen, dass ein kontinuierlich oder sukzessiv aus einer Presse austretender flacher Holzwerkstoff zu einzelnen Platten gleicher Abmessungen beschneidbar ist.

Die Vorrichtung nach der Erfindung eignet sich für Holzwerkstoffe. Gerade weil man sagt "Holz arbeitet" ist der Regelkreis, in dem die Messergebnisse mit der Sägenausrichtung ständig nachgeführt werden, besonders effektiv.

Es ist vorgesehen, dass mehrere Schneideinrichtungen zum Quertrennen des Holzwerkstoffs vorhanden sind.

Damit wird der Vorgang beschleunigt. Einerseits können unterschiedliche Sägen für den "geraden" Schnitt am vorderen und am hinteren Ende in Transportrichtung dienen, andererseits kann eine zweite Säge dann zum Einsatz kommen, wenn die andere noch nicht wieder in ihre Ausgangsposition zurückgefahren ist.

In der Praxis hat es sich gezeigt, dass vornehmlich bei Mehrsägenbetrieb die Maßabweichungen in der Länge größer sind als beim Einsatz einer Säge. Die Maßabweichungen nehmen zu, je mehr Sägenaggregate abwechselnd schneiden und je höher die Geschwindigkeit des Materialstrangs ist, bei Produktionswechseln sowie beim Anfahren der Anlage (aus thermischen Gründen). Die Maßabweichungen gegenüber dem Sollmaß sind nicht immer konstant, sondern sie können von Platte zu Platte abweichen. Darunter leidet das Erscheinungsbild der gebildeten Stapel. Diese Abweichungen können durch das permanente Nachregeln gemäß der Erfindung minimiert werden. Aber auch bei der Inbetriebnahme der Anlage ergeben sich zahlreiche Vorteile. So war es bis bislang zum Einstellen der Schnittgenauigkeit von beispielsweise drei Schneideinrichtungen notwendig, zunächst jede Säge im Einzelbetrieb und danach jede Kombination im Tandembetrieb einzurichten (Tandembetrieb 1+2, 1+3, 2+3). In der Praxis musste also für jede der 6 unterschiedlichen Modi so lange Produktion gefahren werden, bis jeweils eine Platte (bei Einzelsägenbetrieb) oder zwei Platten (bei Tandembetrieb) aus der Produktionslinie herausgefahren, manuell vermessen und die Messwerte in die Eingabemaske der Sägensteuerung eingegeben wurden. Bei einer Quattro-Säge wären 10 unterschiedliche Modi einzurichten. Inbetriebnehmer derartiger Anlagen schätzen den Zeitaufwand für das Einrichten einer 3-fach-Säge auf mehrere Tage, den einer 4-fach-Säge auf 1-2 Wochen ein. Das Einrichten der Sägen ist zudem nicht nur bei der Erst-Inbetriebnahme notwendig, sondern auch nach dem Austausch von defekten Teilen in der Elektrik für die Längenmessung (z. B. Encoder oder Zählerkarten) oder nach größeren mechanischen Wartungs- und Reparaturarbeiten. Beim Einsatz des im Rahmen dieser Erfindung genannten Closed Loops würde die Säge einen automatischen Einrichtbetrieb durchlaufen, beginnend mit dem Einzelsägenbetrieb von Säge 1. In der Vermessungsstation wird die erste Platte vermessen und die Werte an die Sägensteuerung gesendet, die automatisch korrigiert und nach Bestätigung der Maßhaltigkeit der als nächstes gemessenen Platte automatisch auf den Einzelsägenbetrieb von Säge 2 umschaltet. Dieser Vorgang läuft dann automatisch für alle 6 Modi ab (3x Einzelsägenbetrieb und 3x Tandembetrieb), bis alle Sägen eingerichtet sind.

Es ist vorgesehen, dass mindestens vier Messkameras, und zwar jeweils eine zur Vermessung jeder Plattenecke vorhanden sind.

Versuche haben gezeigt, dass mit einer Ausrichtung von vier Kameras auf die Ecken der geschnittenen Platte es möglich wird, eine Genauigkeit von +/- 0.25 mm sowohl für die Plattenbreite als auch die Plattenlänge sowie die Diagonalen zu erzeugen. Die Messkameras nehmen zum exakt gleichen Zeitpunkt die Ecken der geschnittenen Platte mit einer Belichtungszeit von wenigen Mikrosekunden auf. Dadurch kann die Messgenauigkeit von +/- 0.25 mm bis zu einer Transportgeschwindigkeit der zu vermessenden Platte von 4 m/s gewährleistet werden.

Vorzugsweise sind die Messkameras über Targets kalibrierbar.

Diese Form der Kalibrierung bringt insbesondere Vorteile im Anfahrbetrieb, beispielsweise bei der Umstellung auf ein neues Format. Sie ist relativ schnell durchführbar und vermeidet längere Ausfallzeiten einer Anlage. In jeder der 4 Kameras wird die X- und Y-Koordinate der jeweiligen Plattenecke ermittelt. Um die maßliche Beziehung dieser 4 einzelnen Koordinaten-Punkte zueinander herzustellen - was für die Ermittlung der Plattenabmessung erforderlich ist - wird also ein übergeordnetes Koordinatensystem aufgebaut. Dieses übergeordnete "Basis-Koordinatensystem", wird durch 4 exakt ausgerichtete Target-Positionen gebildet, in der die Messkameras kalibriert werden. Targets in Verbindung mit Markierungspunkten bilden in einer Ebene die Eckpunkte eines exakten Rechtecks. Es wird also nicht nur dann genau gemessen, wenn die Platte exakt ausgerichtet ist und sich beim Durchlauf nicht verdreht.

Wenigstens eine Messkamera ist in einen Bereich oberhalb der zu vermessenden Platte verfahrbar.

Insbesondere sind sogar wenigstens zwei Messkameras oberhalb und innerhalb der Abmessung der zu vermessenden verfahrbar. Die Verfahrbarkeit einer oder zwei Messkameras bietet den Vorteil, dass die Messkamera die (obere) Plattenecke betrachtet, wobei die Auflagefläche der Platte, also beispielsweise das Transportband, den Hintergrund des Bildes ausmacht. In Verbindung mit einem speziellen Lichtemitter, der sich ober- und innerhalb der Abmessungen der zu vermessenden Platte befindet, ist die Ecke der Platte durch Schattenwurf besonders deutlich zu identifizieren und zu lokalisieren.

Besonders bevorzugt ist die Auswerte- und Steuerungseinheit geeignet, Einflussgrößen wie den Abkühlungsvorgang oder die Feuchtigkeit oder das Gewicht oder die Transportgeschwindigkeit der Platte bei der Ansteuerung der Schneideinrichtung zu berücksichtigen.

Es wird also mittels empirischer Daten, die in der Auswerteeinheit in einem Speicher zur Verfügung stehen, auch der Schrumpfungs- oder Ausdehnungsprozess der Platte aufgrund von Temperatur- oder Feuchtigkeitsänderungen mit berücksichtigt, um das gewünschte endgültige Plattenmaß zu erhalten. Auch das Flächengewicht und die Transportgeschwindigkeit der Platte können beim Schneiden einen Einfluss auf das endgültige Maß haben. Wenn also beispielsweise die Platte im warmen Zustand nach der Presse vermessen wird, so kann der Abkühlungsprozess und dessen Auswirkungen auf die Geometrie der Platte bei der Nachführung der Stelleinrichtung berücksichtigt werden. Das ist ein entscheidender Schritt um die Fertigungstoleranzen deutlich zu verbessern. Auf diese Weise werden auch also unliebsame Störgrößen bei der Ausrichtung der Stelleinrichtung für die Schneideinrichtung berücksichtigt. Das Ergebnis ist ein Zuschnitt mit derart geringen Toleranzen, wie es sie bislang nicht gab.

Das erfindungsgemäße Verfahren nach Anspruch 1 umfasst unter anderem folgende Schritte
- Schneiden eines flachen und gepressten Werkstoffs mit Hilfe wenigstens einer Schneideinrichtung,
- Transport der entstandenen Platte zu einer Vermessungsstation, wobei die Vermessungsstation ein Kamera-Plattenmesssystem mit Messkameras umfasst,
- optische Abtastung der Plattenecken und Weitergabe von gemessenen Raumdaten an eine rechnergestützte Auswerte- und Steuerungseinheit, gekennzeichnet durch die
- Ermittlung und Berechnung der genauen Kantenlängen und Winkeln zwei benachbarter Kanten,
- Berechnung der Stelldaten zur Ansteuerung einer Stelleinrichtung zur Veränderung von Arbeitsparametern der Schneideinrichtung.

Zur Veränderung von Arbeitsparametern der Schneideinrichtung gehören dabei beispielsweise die Verstellung der Position der Schneideinrichtung oder deren Schneidgeschwindigkeit.

Es ist vorteilhaft, wenn die Stelleinrichtung die Ausrichtung der Schneideinrichtung kontinuierlich beeinflusst. Hier gelten verfahrensmäßig analog die gleichen Vorteile wie bei der bereits beschriebenen Vorrichtung. In der Regel werden die Führungen der Kreissägen in ihrer Position oder ihrem Winkel durch motorische Stellelemente verändert.

Die Stelldaten werden aus einem Vergleich von Kantenlängen, Diagonalen und/oder Winkeln an der Platte ermittelt.

Es hat sich gezeigt, dass auf dem Markt von der Firma Sick AG einsetzbare optische Kamera-Messsystem für diesen speziellen Anwendungsfall hervorragend geeignet sind. Die in der Erfindung angewendete Auswertesoftware ist mit Speisung der durch das Kameramesssytem gewonnenen Raumdaten danach in der Lage, die genauen Abmessungen der Platte festzustellen. Bei leichten Abweichungen in den Diagonalen, den Kantenlängen und/oder den Eckwinkeln wird die Ausrichtung der Schneideinrichtung durch Verstellen der Stelleinrichtung nachjustiert, damit folgende Platten genau den geforderten Toleranzen in ihren Abmessungen entsprechen.

Vorzugsweise erfolgt die Verstellung der Säge(n) für eine nachfolgende Platte im Closed Loop in Abhängigkeit von den ermittelten Kantenlängen, Diagonalen und/oder Winkeln an einer Platte in der Vermessungsstation.

Es findet hier nicht nur ein einfaches Nachstellen, sondern stetiges Überwachen der Messdaten und ein geregeltes Nachführen der Stelleinrichtungen der Schneideinrichtung statt.

Es ist vorgesehen, dass sich die Messkameras während des Messvorgangs oberhalb und innerhalb der Abmessungen der zu vermessenden Platte befinden.

Zumindest eine Messkamera wird in den Bereich oberhalb und innerhalb der Abmessungen der zu vermessenden Platte verfahren.

Wie bereits bei der Beschreibung der Vorrichtung erläutert, ist der "Blick" der Kamera oberhalb der Plattenfläche auf eine Ecke, wobei die Auflagefläche der Platte den Hintergrund bildet, besonders kontrastreich und liefert bessere Messergebnisse. Je nach gewünschter Länge der Platte kann es vorkommen, dass sich dazu in der Regel zwei Kameras ein Stück bewegen müssen.

Mit Vorteil wird jeder Messkamera unter Verwendung von Targets ein eigenes Mess-Koordinatensystem zugeordnet.

Ausschlaggebend für die Präzision des Messsystems ist dann die räumliche Zuordnung der Einzel-Koordinatensysteme zu dem Gesamt- bzw. Basis-Koordinatensystem. Damit ist jedoch in kontrollierter Weise eine genaue Darstellung der Plattengeometrie möglich, auch wenn sie nicht absolut rechtwinklig in die Vermessungsstation einläuft und diese durchläuft.

Die Erfindung wird im Folgenden anhand von Ausführungsbeispielen unter Bezugnahme auf die Zeichnungen näher erläutert. In diesen zeigt
- **Figur 1**: eine schematische Darstellung eine erfindungsgemäßen Vorrichtung zum Beschneiden und Vermessen einer Platte,
- **Figur 2**: das Gerüst der Vorrichtung, ausgestattet mit einer Kalibrierungseinrichtung,
- **Figur 3**: Anordnung einer Messkamera oberhalb der Plattenecke,
- **Figur 4**: eine Platte und deren gemessenen geometrischen Daten,
- **Figur 5**: eine dreidimensionale Ansicht der erfindungsgemäßen Vermessungsstation

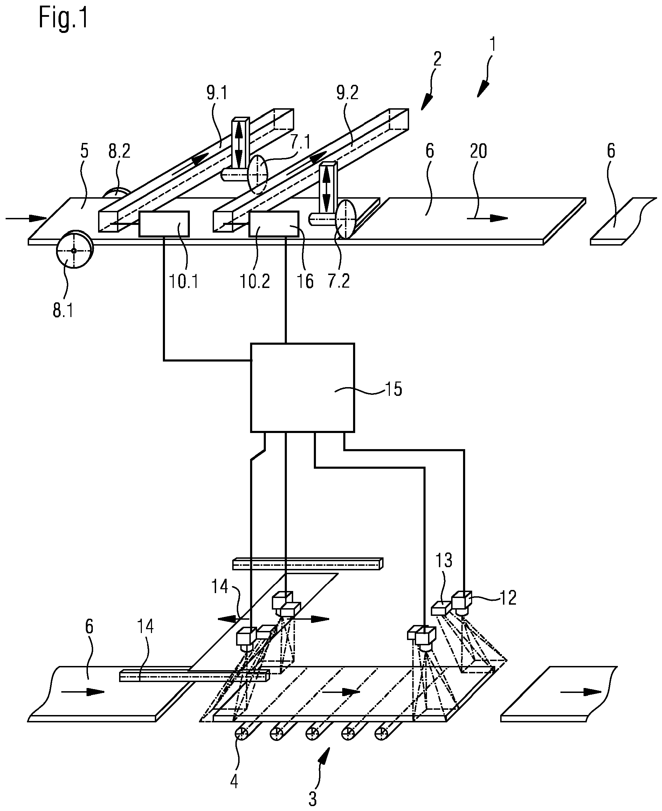

In Figur 1 erkennt man die Vorrichtung zum Beschneiden und Vermessen einer Platte. Dabei sind die Schneidstation 2 und die Vermessungsstation 3 aus Gründen der Übersichtlichkeit untereinander dargestellt. Der im oberen Teil links eintretende flache, gerade aus der nicht dargestellten Presse ausgetretene Holzwerkstoff 5 wird in der Schneidstation 2 in Längen von 1800 bis 8800 mm über Schneideinrichtungen 7.1, 7.2 gesägt. Beispielhaft sind in diesem Ausführungsbeispiel zwei Kreissägen dargestellt. Diese bewegen sich an Sägenführungen 9.1, 9.2 über die gesamte Plattenbreite und sind beispielsweise als Diagonalsägen ausgeführt, die den Vorschub der Platten in Plattenlaufrichtung 20 berücksichtigen, um einen "geraden", d. h zur Plattenlaufrichtung 20 rechtwinkligen Schnitt zu erzeugen. Die Sägenführungen 9.1, 9.2 sind über Stelleinrichtungen 10.1, 10.2 verstellbar. Zusätzlich können Besäumungseinrichtungen 8.1, 8.2 für die Platten vorgesehen sein. Die geschnittenen Platten 6 mit einer Stärke von 1 bis 60 mm laufen anschließend im unteren Teil der Figur wieder von links kommend in die in Plattenlaufrichtung 20 hinter der Schneidstation 2 angeordneten Vermessungsstation 3 ein. Sie werden dabei mit einer Transporteinrichtung 4 weitergeführt, die beispielsweise durch angetriebene Transportbänder oder Rollen gebildet ist.

In der Vermessungsstation 3 sind vier Messkameras 12 oberhalb der Ecken der zu vermessenden Platte 6 angeordnet. Unterstützt von Lichtemittern 13, die zur Beleuchtung der Plattenecken, aber auch zu Kalibrierungszwecken dienen, sind diese Kameras in der Lage, die Raumdaten der Plattenecken zu erfassen und an eine Auswerte- und Steuerungseinheit 15 weiterzugeben. Zur Berücksichtigung unterschiedlicher Plattengrößen sind die in Plattenlaufrichtung 20 hinteren Kameras sowohl in der gleichen Laufrichtung sowie in der Richtung der Plattenbreite an Kameraführungen 14 verfahrbar angeordnet.

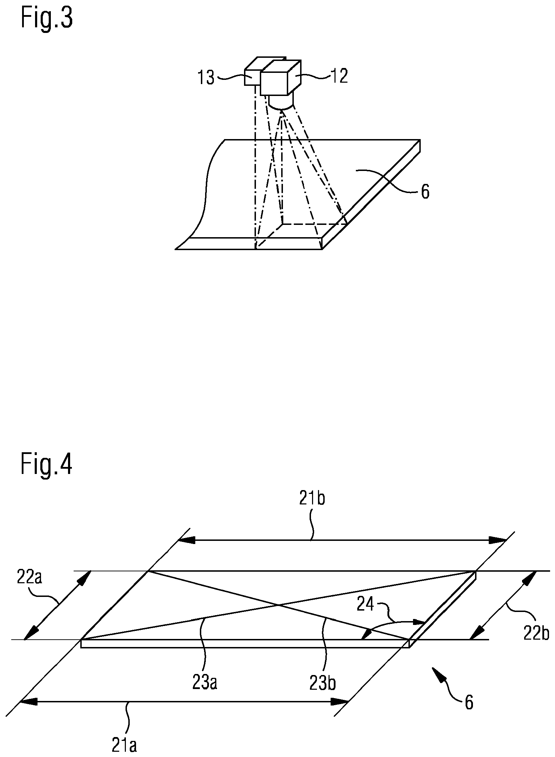

In der Auswerte- und Steuerungseinheit 15 werden die von den Messkameras 12 übermittelten Daten ausgewertet und zur Verbesserung des Ergebnisses, das heißt gleicher linker und rechter Seitenkantenlänge, gleicher vorderer und hinterer Kantenbreitenlänge, gleicher Eckwinkel und gleicher Diagonalenlängen (siehe hierzu Figur 4), wird wenigstens eine Stelleinrichtung 10.1, 10.2 der Schneideinrichtungen angesteuert und über Stellmotore (elektrisch oder hydraulisch oder pneumatisch) reguliert.

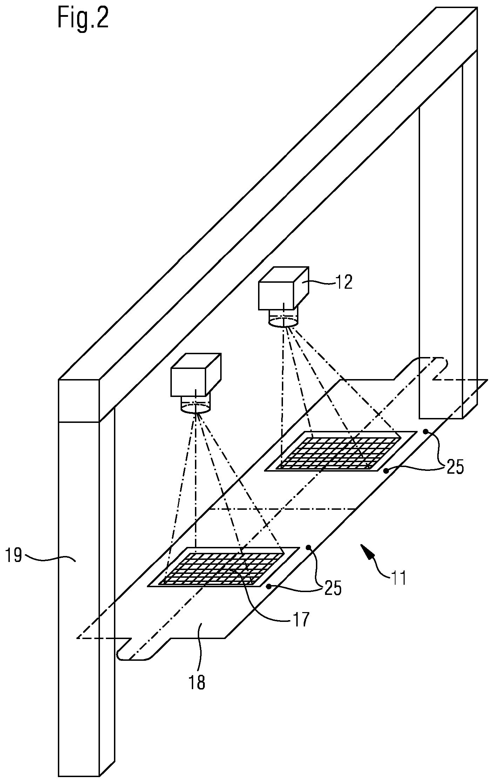

Figur 2 zeigte eine Kalibrierungseinrichtung 11 für die Messkameras 12 mit einem Träger 18 zur Aufnahme von Targets 17. Dieser kann am Gestell der Vorrichtung 19 zentriert und positionsgenau befestigt werden. Mittels der Targets 17 werden die Messkameras 12 kalibriert. Mit den Targets 17 werden jeweils die beiden quer zur Transportrichtung angeordneten Kameras zueinander vermessen. Der Träger 18 besitzt Aufnahmen für zwei Targets 17 (jeweils ein Target befindet sich im Erfassungsraum einer Kamera) sowie zusätzliche Markierungspunkte 25 zur Berechnung des Basis-Koordinatensystems. Die hintere Kalibrierung wird in einer definierten Position Kameraführung 14 durchgeführt. Jede Kamera erhält dadurch ein ihr eigenes Koordinatensystem, das bei den Messvorgängen mit dem Basiskoordinatensystem abgeglichen wird.

Figur 3 betont noch einmal die Anordnung der Messkamera 12 oberhalb einer Ecke der Platte 6. So ist mit entsprechendem Untergrund der Kontrast zur genauen Ermittlung der genauen Raumdaten der Ecke höher.

In der Figur 4 sind die die zu ermittelnden geometrischen Hauptdaten, die Seitenkantenlängen 21a, 21b, die Breitenkantenlängen 22a, 22b, die Diagonalenlängen 23a, 23b und die Eckwinkel 24 dargestellt. Alle diese geometrischen Daten sind über eine entsprechende Stelleinrichtung 10.1, 10.2 beeinflussbar. Mit hinterlegten Daten über die Einflussfaktoren von Materialeigenschaften, Temperatur-Abkühlung und Feuchtigkeitsgehalt in der Auswerte- und Steuereinheit 15 lässt sich das Ergebnis der Schnitteinstellung der Sägen in Hinsicht auf die endgültigen Abmessungen noch einmal verbessern.

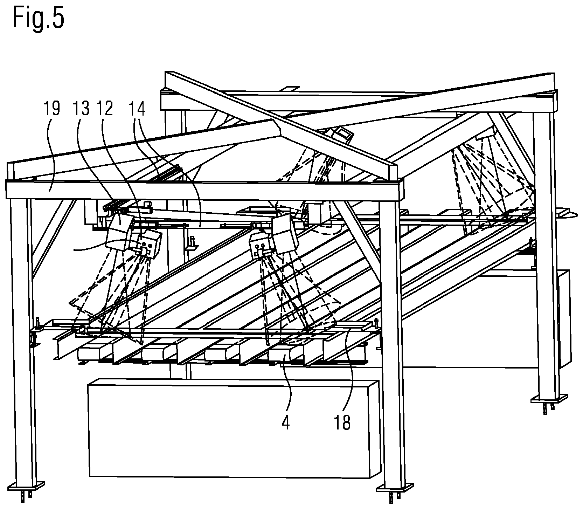

Figur 5 zeigt die Vermessungsstation in einer einfachen Ausführung noch einmal in dreidimensionaler Darstellung. Eine Platte ist in dieser Zeichnung nicht dargestellt, um die Transportvorrichtung 4 in Form von Förderbändern für die Platten andeuten zu können. Man erkennt auch die zu den Ecken einer zu vermessenden Platte ausgerichteten Messkameras 12 und deren Kameraführungen 14.

### Bezugszeichenliste

- 1: Vorrichtung zum Beschneiden und Vermessen
- 2: Schneidstation
- 3: Vermessungsstation
- 4: Transporteinrichtung
- 5: Flacher Holzwerkstoff (aus einer Presse kommend)
- 6: Platte
- 7.1, 7.2: Schneideinrichtung, Säge (Diagonalkreissäge)
- 8.1, 8.2: Besäumungseinrichtung
- 9.1, 9.2: Sägenführung
- 10.1, 10.2: Stelleinrichtung
- 11: Kalibrierungseinrichtung
- 12: Messkamera
- 13: Lichtemitter
- 14: Kameraführung
- 15: Auswerte- und Steuerungseinheit
- 16: Stellmotor
- 17: Target
- 18: Träger
- 19: Gestell
- 20: Plattenlaufrichtung
- 21a, 21b: Seitenkantenlänge
- 22a, 22b: Breitenkantenlänge
- 23,a, 23,b: Diagonalenlänge
- 24: Eckwinkel
- 25: Markierungspunkt

## Patentansprüche

1. Verfahren zum Beschneiden und Vermessen einer Holzwerkstoffplatte (6) mit folgenden Schritten
- Schneiden eines flachen und gepressten Holzwerkstoffs (5) durch Quertrennen mit mehreren Schneideinrichtungen (7.1, 7.2),
- wobei ein kontinuierlich oder sukzessiv aus einer Presse austretender flacher Holzwerkstoff (5) zu einzelnen Holzwerkstoffplatten (6) gleicher Abmessung (21A, usw.) beschnitten wird,
- Transport der entstandenen Holzwerkstoffplatte (6) zu einer Vermessungsstation (3), wobei die Vermessungsstation (3) ein Kamera-Plattenmesssystem mit Messkameras (12) umfasst,
- optische Abtastung der Plattenecken und Weitergabe von gemessenen Raumdaten an eine rechnergestützte Auswerte- und Steuerungseinheit (15),
- Ermittlung und Berechnung der genauen Kantenlängen und Winkeln zwei benachbarter Kanten, und
- Berechnung der Stelldaten zur Ansteuerung einer Stelleinrichtung (10.1, 10.2) zur Ausrichtung der Schneideinrichtung (7.1, 7.2), wobei die Stelldaten aus einem Vergleich von Kantenlängen, Diagonalen und/oder Winkeln (21a, 21b, 22a, 22b, 23a, 23b, 24) an der Holzwerkstoffplatte (6) ermittelt werden,
wobei zur Ermittlung von Kantenlängen, Diagonalenlängen und/oder Winkeln (21a, 21b, 22a, 22b, 23a, 23b, 24) vier Messkameras eingesetzt werden, die jeweils auf die Ecken der Holzwerkstoffplatte ausgerichtet sind,
wobei sich die Messkameras (12) während des Messvorgangs oberhalb und innerhalb der Abmessungen der zu vermessenden Holzwerkstoffplatte (6) befinden und
wobei zumindest eine Messkamera (12) in den Bereich oberhalb der zu vermessenden Holzwerkstoffplatte (6) verfahren wird.

2. Verfahren gemäß Anspruch 1, **dadurch gekennzeichnet, dass** die Stelleinrichtung (10.1, 10.2) die Ausrichtung der Schneideinrichtung (7.1, 7.2) kontinuierlich beeinflusst.

3. Verfahren gemäß Anspruch 2, **dadurch gekennzeichnet, dass** die Verstellung der Schneideinrichtung(en) (7.1, 7.2) für eine nachfolgende Holzwerkstoffplatte (6) im Closed Loop in Abhängigkeit von den ermittelten Kantenlängen, Diagonalen und/oder Winkeln (21a, 21b, 22a, 22b, 23a, 23b, 24) an einer Holzwerkstoffplatte (6) in der Vermessungsstation (3) erfolgt.

4. Verfahren gemäß einem der Ansprüche 1 bis 3, **dadurch gekennzeichnet, dass** jeder Messkamera (12) unter Verwendung von Targets (17) ein eigenes Mess-Koordinatensystem zugeordnet wird.

5. Vorrichtung zum Beschneiden und Vermessen einer Holzwerkstoffplatte, eingerichtet zur Durchführung eines Verfahrens nach einem der Ansprüche 1 bis 4, mit
mehreren verstellbaren Schneideinrichtungen (7.1, 7.2) zum Quertrennen eines flachen und gepressten Holzwerkstoffs (5) in einer Schneidstation (2),
wobei ein kontinuierlich oder sukzessiv aus einer Presse austretender flacher Holzwerkstoff (5) zu einzelnen Holzwerkstoffplatten (6) gleicher Abmessungen (21a, 21b, 22a, 22b, 23a, 23b, 24) beschneidbar ist,
einer Transporteinrichtung (4) zum Transport der geschnittenen Holzwerkstoffplatte (6) zu einer Vermessungsstation (3), wobei die Vermessungsstation (3) ein Kamera-Plattenmesssystem mit mindestens vier Messkameras (12) umfasst, und
einer rechnergestützten Auswerte- und Steuerungseinheit (15),
wobei aufgrund der durch die Messkameras (12) gewonnenen und an die Auswerte- und Steuerungseinheit (15) weitergeleiteten Messergebnisse eine Stelleinrichtung (10.1, 10.2) zur Ausrichtung der Schneideinrichtung (7.1, 7.2) ansteuerbar ist, und wenigstens eine Messkamera (12) in einen Bereich oberhalb der zu vermessenden Holzwerkstoffplatte (6) verfahrbar ist.

6. Vorrichtung gemäß Anspruch 5, **dadurch gekennzeichnet, dass** jeweils eine Messkamera (12) zur Vermessung jeder Plattenecke vorhanden ist.

7. Vorrichtung gemäß einem der Ansprüche 5 oder 6, **dadurch gekennzeichnet, dass** die Messkameras (12) über Targets (17) kalibrierbar sind.

8. Vorrichtung gemäß einem der Ansprüche 5 bis 7, **dadurch gekennzeichnet, dass** die Auswerte- und Steuerungseinheit (15) geeignet ist, Einflussgrößen wie den Abkühlungsvorgang oder die Feuchtigkeit oder das Gewicht oder die Transportgeschwindigkeit der Holzwerkstoffplatte bei der Ansteuerung der Schneideinrichtung (7.1, 7.2) zu berücksichtigen.

## Claims

1. Method of cutting and measuring a wood composite panel (6) with the following steps
- cutting a flat and pressed wood material (5) through cutting across with several saw devices (7.1, 7,2),
- wherein a flat wood material (5) continuously or successively emerging from a press is cut into individual wood composite panels (6) of the same dimensions (21A, etc.),
- transporting of the produced wood composite panel (6) to a measuring station (3), wherein the measuring station (3) comprises a camera panel measuring system with cameras (12),
- optical scanning of the panel corners and forwarding of measured spatial data to a computer-assisted evaluation and control unit (15),
- determination and calculation of the precise edge lengths and angles of two adjacent edges, and
- calculating the adjusting data for controlling an adjusting device (10.1, 10.2) for aligning the cutting device (7.1, 7.2), wherein the adjusting data are determined from a comparison of edge lengths, diagonals and/or angles (21a, 21b, 22a, 22b, 23a, 23b, 24) on the wood composite panel (6),
wherein for determining edge lengths, diagonal lengths and/or angles (21a, 21b, 22a, 22b, 23a, 23b, 24), four measuring cameras are used, which are each aligned to the corners of the wood composite panel,
wherein during the measuring process the measuring cameras (12) are located above and within the dimensions of the wood composite panel (6) to be measured, and
wherein at least one measuring camera (12) is moved into the area above the wood composite panel (6) to be measured.

2. Method according to claim 1, **characterised in that** the adjusting device (10.1, 10.2) continuously influences the alignment of the cutting device (7.1, 7.2).

3. Method according to claim 2, **characterised in that** the adjustment of the cutting device(s) (7.1, 7.2) for a following wood composite panel (6) takes place in the closed loop as a function of the determined edge lengths, diagonals and/or angles (21a, 21b, 22a, 22b, 23a, 23b, 24) on a wood composite panel (6) in the measuring station (3).

4. Method according to any one of claims 1 to 3, **characterised in that**, using targets (17), a separate measuring coordinate system is assigned to each measuring camera (12),

5. Device for cutting and measuring a wood composite panel, set up for implementing a method according to any one of claims 1 to 4, with several adjustable cutting devices (7.1, 7,2) for cutting across a flat and pressed wood material (5) in a cutting station (2), wherein a flat wood material (5) continuously or successively emerging from a press can be cut into individual wood composite panels (6) of the same dimensions (21a, 21b, 22a, 22b, 23a, 23b, 24),
a transporting device (4) for transporting the cut wood composite panels (6) to a measuring station (3), wherein the measuring station (3) comprises a camera panel measuring system with at least four measuring cameras (12), and
a computer-assisted evaluation and control unit (15),
wherein on the basis of the measuring results obtained by the measuring cameras (12) and transmitted to the evaluation and control unit (15), an adjusting device (10.1, 10.2) for aligning the cutting device (7.1, 7.2) can be controlled,
and at least one measuring camera (12) can be moved into an area above the wood composite panel (6) to be measured.

6. Device according to claim 5, **characterised in that** in each case one measuring camera (12) is present for measuring each panel corner.

7. Device according to any one of claims 5 or 6, **characterised in that** the measuring cameras (12) can be calibrated by way of targets (17).

8. Device according to any one of claims 5 to 7, **characterised in that** the evaluation and control unit (15) is suitable for taking into consideration influencing factors such as the cooling process or the moisture content or the weight or the transporting speed of the wood composite panel when controlling the cutting device (7.1, 7.2).

## Revendications

1. Procédé de découpe et de mesure d'un panneau de matériau dérivé du bois (6) avec les étapes suivantes :
- découpe d'un matériau dérivé du bois plat et comprimé (5) par coupe transversale avec plusieurs systèmes de découpe (7.1, 7.2),
- sachant qu'un matériau dérivé du bois plate (5) sortant en continu et successivement d'une presse est découpée en panneaux de matériau dérivé du bois individuels (6) de dimension identique (21A, etc.),
- transport du panneau de matériau dérivé du bois réalisé (6) vers un poste de mesure (3), sachant que le poste de mesure (3) comprend un système de mesure de panneau avec caméras avec des caméras de mesure (12),
- exploration optique des coins de panneau et transmission des données spatiales mesurées à une unité d'évaluation et de commande assistée par ordinateur (15),
- détermination et calcul des longueurs de bords et des angles exacts de deux bords voisins, et
- calcul des données de réglage pour activation d'un système de réglage (10.1, 10.2) pour orienter le système de découpe (7.1, 7.2), sachant que les données de réglage sont déterminées sur le panneau de matériau dérivé du bois (6) à partir d'une comparaison des longueurs de bords, des diagonales et/ou des angles (21a, 21b, 22a, 22b, 23a, 23b, 24),
sachant que pour déterminer les longueurs de bords, les longueurs de diagonale et/ou les angles (21a, 21b, 22a, 22b, 23a, 23b, 24) quatre caméras sont utilisées, qui sont respectivement orientées sur les coins du panneau de matériau dérivé du bois,
sachant que les caméras de mesure (12) se trouvent pendant le processus de mesure au-dessus et à l'intérieur des dimensions du panneau de matériau dérivé du bois (6) à mesurer, et
sachant qu'au moins une caméra de mesure (12) est déplacée dans la zone au-dessus du panneau de matériau dérivé du bois (6) à mesurer.

2. Procédé selon la revendication 1, **caractérisé en ce que** le système de réglage (10.1, 10.2) influence en continu l'orientation du système de découpe (7.1, 7.2).

3. Procédé selon la revendication 2, **caractérisé en ce que** le réglage du/des système(s) de découpe (7.1, 7.2) a lieu dans le poste de mesure (3) pour un panneau de matériau dérivé du bois (6) suivant en 'Boucle fermée' en fonction des longueurs de bords, des diagonales et/ou des angles déterminés (21a, 21b, 22a, 22b, 23a, 23b, 24) sur un panneau de matériau dérivé du bois (6).

4. Procédé selon l'une quelconque des revendications 1 à 3, **caractérisé en ce qu'**un système de coordonnées de mesure propre est attribué à chaque caméra de mesure (12) en utilisant des éléments de ciblage (17).

5. Dispositif de découpe et de mesure d'un panneau de matériau dérivé du bois, agencé pour exécuter un procédé selon l'une quelconque des revendications 1 à 4, avec plusieurs systèmes de découpe réglables (7.1, 7.2) pour la coupe transversale d'un matériau dérivé du bois plat et comprimé (5) dans un poste de découpe (2), sachant qu'un matériau dérivé du bois plate (5) sortant en continu et successivement d'une presse peut être découpée en panneaux de matériau dérivé du bois individuels (21a, 21b, 22a, 22b, 23a, 23b, 24), s (6) de dimensions identiques,
un système de transport (4) pour le transport du panneau de matériau dérivé du bois découpé (6) vers un poste de mesure (3), sachant que le poste de mesure (3) comprend un système de mesure de panneau avec caméras avec au moins quatre caméras de mesure (12), et
une unité d'évaluation et de commande assistée par ordinateur (15),
sachant qu'en raison des résultats de mesure acquis par les caméras de mesure (12) et transmises à l' unité d'évaluation et de commande (15), un système de réglage (10.1, 10.2) peut être activé pour orienter le système de découpe (7.1, 7.2),
et au moins une caméra de mesure (12) peut être déplacée dans une zone située au-dessus du panneau de matériau dérivé du bois (6) à mesurer.

6. Dispositif selon la revendication 5, **caractérisé en ce qu'**une caméra de mesure (12) est respectivement présente pour la mesure de chaque coin de panneau.

7. Dispositif selon l'une quelconque des revendications 5 ou 6, **caractérisé en ce que** les caméras de mesure (12) peuvent être étalonnées par le biais d'éléments de ciblage (17).

8. Dispositif selon l'une quelconque des revendications 5 à 7, **caractérisé en ce que** l'unité d'évaluation et de commande (15) est adaptée pour prendre en considération des valeurs d'influence comme le processus de refroidissement ou l'humidité ou le poids ou la vitesse de transport du panneau de matériau dérivé du bois, lors de l'activation de la direction de découpe (7.1, 7.2) .
